Europäisches Patentamt

European Patent Office

Office européen des brevets

(11) Publication number: **0 220 597**
**B1**

# EUROPEAN PATENT SPECIFICATION

(45) Date of publication of the patent specification:
31.01.90

(51) Int. Cl.⁴: **G11B 5/64**, G11B 5/66

(21) Application number: **86114203.2**

(22) Date of filing: **14.10.86**

(54) Thin film vertical magnetic recording medium with a substrate, an intermediate layer and a magnetisable layer.

(30) Priority: **28.10.85 US 791963**

(43) Date of publication of application:
**06.05.87 Bulletin 87/19**

(45) Publication of the grant of the patent:
**31.01.90 Bulletin 90/5**

(84) Designated Contracting States:
**DE FR GB IT**

(56) References cited:
**EP-A- 0 093 838**
**EP-A- 0 140 513**
**DE-A- 2 749 712**

**JOURNAL OF APPLIED PHYSICS, vol. 57, no. 8, Part 2B, April 1985, pages 4019-4021, Woodbury, New York, US; M. NAOE et al.: "Effect of additional element (Fe, Zr, Ta) for Co-Cr films deposited by targets facing type of sputtering"**

(73) Proprietor: International Business Machines Corporation, Old Orchard Road, Armonk, N.Y. 10504(US)

(72) Inventor: Howard, James Kent, 470 La Baree, Morgan Hill California 95037(US)

(74) Representative: Atchley, Martin John Waldegrave, IBM United Kingdom Limited Intellectual Property Department Hursley Park, Winchester Hampshire SO21 2JN(GB)

**Description**

This invention relates to a thin film metal alloy medium for vertical magnetic recording, and in particular to such a medium with improved perpendicular magnetic anisotropy.

A thin film metal alloy medium for vertical magnetic recording typically comprises a substrate, a nonmagnetisable intermediate layer formed on the substrate and a magnetisable layer having an ordered crystalline formation with a generally perpendicular magnetic anisotropy formed on the nonmagnetisable intermediate layer. One type of material used as the magnetisable layer is a cobalt-chromium (CoCr) alloy which is sputter-deposited to form a film having a hexagonal close packed (HCP) crystalline structure with the [00.2] axis (the C-axis) oriented perpendicular to the medium substrate. An important factor in the production of a vertical magnetic recording medium is the ability to control the orientation of the HCP CoCr or cobalt-chromium-X (CoCrX) alloy magnetisable layer. The degree to which the C-axis of the HCP structure can be aligned perpendicular to the substrate strongly influences the magnetic properties, such as the perpendicular (or vertical) and horizontal coercivities.

The magnetic properties of a thin film alloy medium made with various substrates, a titanium (Ti) intermediate layer and a CoCr perpendicular magnetisable layer are described by Kobayashi, et al. in "High Density Perpendicular Magnetic Recording on Rigid Disks", Fujitsu Scientific and Technical Journal, Vol. I9, No. 1, pp. 99-126, March, I983. This article discloses that substantially improved perpendicular magnetic anisotropy of the CoCr film is achieved with the use of a Ti intermediate layer, and suggests that the C-axis orientation of the CoCr film is improved because the Ti intermediate layer isolates the influence of the substrate from the CoCr film. A thin film alloy medium having a nonmagnetisable cobalt-tantalum (CoTa) alloy as an intermediate layer and a CoCr perpendicular magnetisable layer is disclosed in Japanese published unexamined patent application JA-A-59-77620.

It is also known to use ternary alloys, such as cobalt-chromium-tantalum (CoCrTa), as the material for the magnetisable layer. EP-A-93838 discloses a medium for vertical magnetic recording having a soft magnetisable intermediate layer of an amorphous CoTa alloy and a magnetisable layer of CoCrTa with perpendicular magnetic anisotropy. The magnetic properties of a vertical recording medium with an 8000 Angstroms ($8 \times 10^{-7}$m) thick CoCrTa magnetisable layer deposited on a 1000 Angstroms ($1 \times 10^{-7}$m) thick Cr intermediate layer are described by Langland and Albert in "Recording on Perpendicular Anisotropy Media with Ring Heads", IEEE Transactions on Magnetics, Vol. MAG17, No. 6, November, I981, pp. 2547-2549.

The object of the present invention is to provide an improved magnetic recording medium for vertical recording.

The present invention relates to a magnetic recording medium for vertical recording of the type comprising a substrate, an intermediate layer formed on the substrate and a magnetisable layer formed on the intermediate layer.

According to the invention the intermediate layer comprises a first constituent of an element selected from the group consisting of tungsten (W), molybdenum (Mo), niobium (Nb), titanium (Ti), vanadium (V), iridium (Ir) and zirconium (Zr), and a second constituent consisting of either cobalt (Co), chromium (Cr), or a solid substitutional solution alloy of CoCr, wherein the amounts of the first and second constituents are present in a fixed stoichometric ratio so as to form an intermetallic compound with a hexagonal crystalline structure, and the magnetisable layer comprises a ternary alloy of the form $(Co_{100-y}Cr_y)X$, wherein y is approximately in the range of 14 to 22 and wherein X is selected from the group consisting of W, Mo, Nb, Ti and V, and has an hexagonal crystalline structure with its C-axis oriented generally perpendicular to said substrate (1).

The hexagonal cell constants of the intermediate layer and the magnetisable layer are related by approximately integral multiples whereby the hexagonal crystalline orientation of the magnetisable layer is enhanced.

The resulting vertical recording medium has substantially improved perpendicular magnetic anisotropy because there is minimal C-axis dispersion of the magnetisable layer. This is believed to be the result of the close lattice matching of the hexagonal cell constants of the intermediate layer and the magnetisable layer.

In order that the invention may be more readily understood an embodiment will now be described with reference to the accompanying drawings, in which:

Fig. 1 is a side view in section of a vertical magnetic recording medium according to the present invention including a substrate, an intermediate layer and a magnetisable layer,

Fig. 2 is a B-H hysteresis loop for a $(Co_{80}Cr_{20})_{90}W_{10}$ magnetisable layer formed on a $(Co_{80}Cr_{20})_3W$ intermediate layer in the recording medium illustrated in Fig. 1,

Fig. 3 is a graph of perpendicular and horizontal coercivities of the medium of Fig. 1 as a function of heater power for a $(Co_{80}Cr_{20})_{90}W_{10}$ magnetisable layer formed on a $(Co_{80}Cr_{20})_3W$ intermediate layer,

Fig. 4 is an X-ray diffraction curve illustrating a peak intensity for $Co_3W$ and corresponding points where diffraction peaks would occur for $Co_{82}Cr_{18}$ and $(Co_{80}Cr_{20})_{90}W_{10}$, and

Fig. 5 is a graph of perpendicular and horizontal coercivities of the medium as a function of the percentage of W in the $(Co_{80}Cr_{20})W$ magnetisable layer.

A vertical magnetic recording medium in accordance with the present invention comprises a substrate 1, an intermediate layer 2 deposited on the substrate and a magnetisable layer 3 deposited on the intermediate layer 2. The intermediate layer comprises either a binary or ternary intermetallic compound.

As used herein the term "intermetallic compound" refers to those chemical compositions which are more than a simple mixture in the form of an alloy, but in which the constituents are present in a fixed stoichometric ratio so that the composition can be essentially represented by a chemical formula. An intermetallic binary compound of two elements, such as cobalt and tungsten, is an intermediate phase which exists only at the discrete stoichometric ratio of three atoms of cobalt to one atom of tungsten. The $Co_3W$ intermetallic compound is indicated on the published phase diagrams for cobalt and tungsten, such as in Constitution of Binary Alloys, McGraw Hill, 1958, p. 519. In a ternary intermetallic compound, the first constituent is a single element and the second constituent is an alloy in which one of the elements in the alloy is present in solid substitutional solution. For example, the ternary intermetallic compound $(Co_{82}Cr_{18})_3W$ is identical in structure to $Co_3W$ with the exception that certain Co atoms are replaced by Cr atoms in substitutional sites.

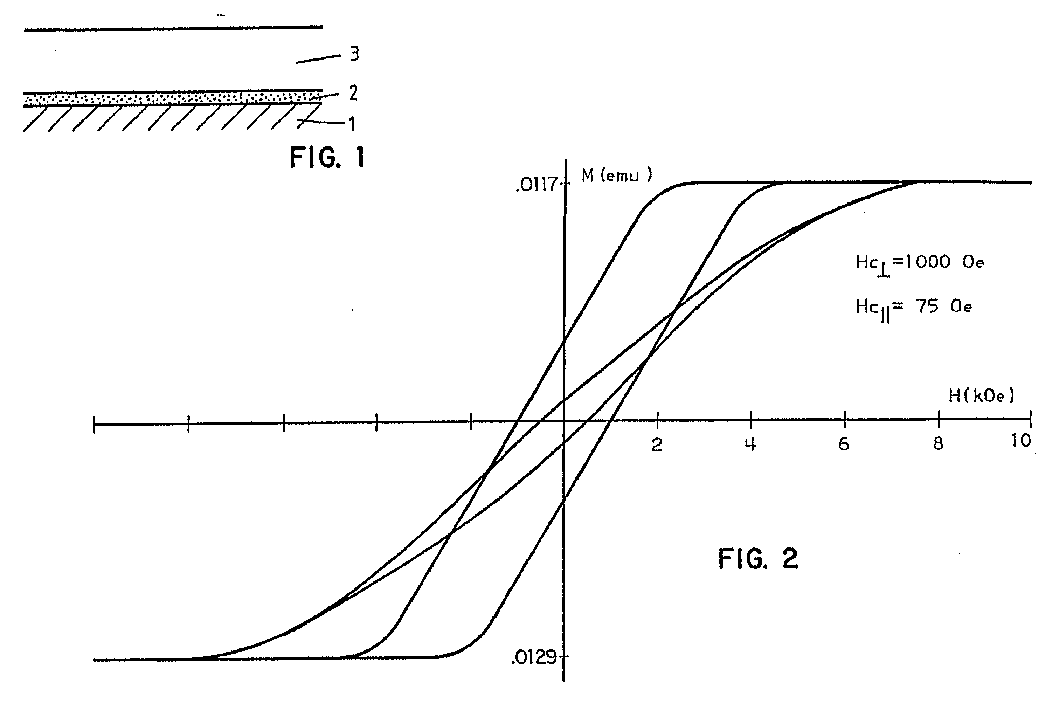

Table 1 lists binary and ternary intermetallic compounds capable of use as intermediate layer in the recording medium of Figure 1. Each of the intermetallic compounds in Table 1 has a hexagonal crystalline structure. The lattice or cell constants for the binary intermetallic compounds are also indicated in Table 1.

Table 1

| Intermetallic compounds | | |
|---|---|---|
| Binary | Ternary | Binary cell constant (Angstroms) ($10^{-10}$m) |
| $Co_3W$ | $(CoCr)_3W$ | $a_0 = 5.13$ |
| $Co_3Mo$ | $(CoCr)_3Mo$ | $a_0 = 5.11$ |
| $Co_2Nb$ | $(CoCr)_2Nb$ | $a_0 = 5.19$ |
| $Co_3Ti$ | $(CoCr)_3Ti$ | $a_0 = 2.55$ |
| $Co_3V$ | $(CoCr)_3V$ | $a_0 = 5.03$ |
| $CrIr$ | | $a_0 = 2.67$ |
| $Cr_2Nb$ | | $a_0 = 4.93$ |
| $Cr_2Zr$ | | $a_0 = 5.10$ |

Each of the ternary intermetallic compounds in Table 1 has a hexagonal cell constant $a_0$ nearly identical to that of its corresponding binary intermetallic compound. This is because the Cr is present in solid substitutional form in the ternary alloy and because Co and Cr have nearly identical atomic radii.

An example of a medium made according to the present invention comprises a silicon substrate, a ternary intermetallic compound of $(Co_{80}Cr_{20})_3W$ as an intermediate nucleating layer and a magnetisable layer of $(Co_{80}Cr_{20})_{90}W_{10}$. Fig. 1 is a representation of such a disk in sectional view. The $(Co_{80}Cr_{20})_3W$ intermediate nucleating layer was formed by sputter deposition on the silicon substrate in a DC magnetron sputtering chamber with an argon pressure of $2 \times 10^{-3}$ Torr and for various substrate deposition temperatures. Separate targets of $Co_{80}Cr_{20}$ and W were used to form an intermediate layer of thickness 500 Angstrom ($5 \times 10^{-8}$m). The power to the $Co_{80}Cr_{20}$ and W targets was controlled to give the 3 to 1 stoichometric ratio. A magnetisable layer of $(Co_{80}Cr_{20})_{90}W_{10}$ of thickness 5000 Angstrom ($5 \times 10^{-7}$m) was then sputter deposited on the intermediate layer without breaking vacuum in the sputtering chamber but by altering the power to the respective targets. Fig 2 is a B-H hysteresis loop for the disk shown in Fig. 1. Such a medium has a vertical coercivity (perpendicular to the plane of the magnetisable layer) of

1000 Oersteds (Oe) $\left( 79{,}6 \frac{KA}{m} \right)$ and a horizontal coercivity (parallel to the plane of the magnetisable

layer) of 75 Oe $\left( 5{,}97 \frac{KA}{m} \right)$.

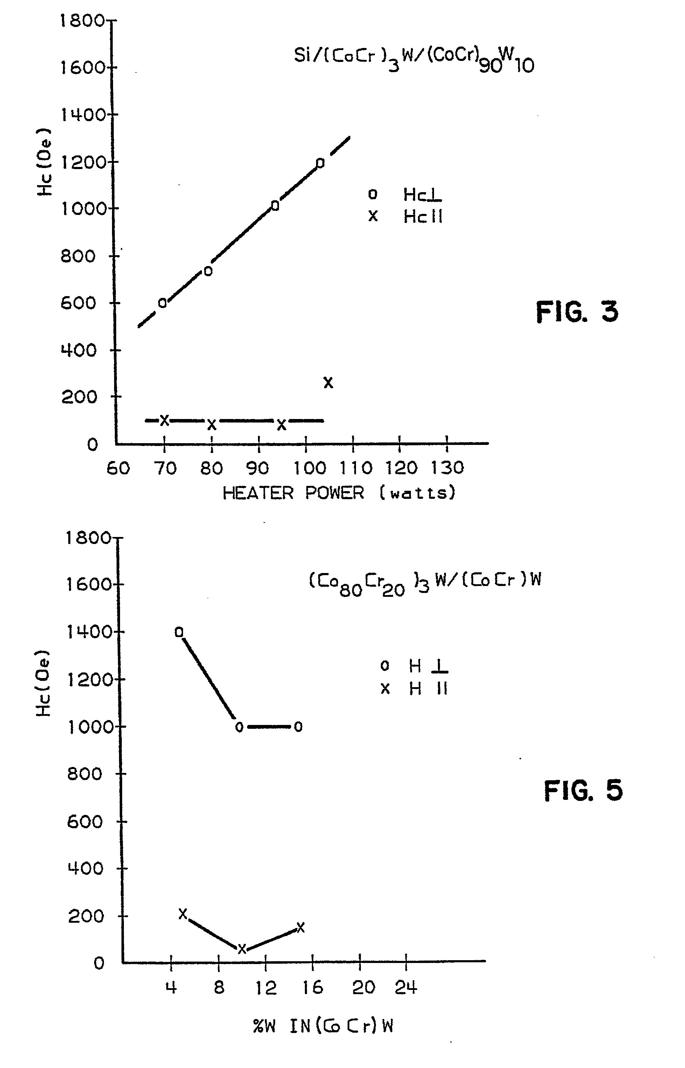

As shown in Fig. 3, the formation of the medium at various substrate deposition temperatures, which is directly related to heater power, shows that the vertical or perpendicular coercivity increases generally linearly with higher power, whereas the in-plane or horizontal coercivity does not change appreciably. The ability to increase the perpendicular coercivity independently of the horizontal coercivity is a distinct advantage in the fabrication of a vertical magnetic recording medium, and is believed to be caused by lattice matching of the hexagonal cell constants between the intermediate nucleating layer and the magnetisable layer. For example, as shown in Table 1, the $(Co_{80}Cr_{20})_3W$ intermediate layer has a hexagonal cell constant approximately the same as $Co_3W$, i.e. $a = 5.13$ Angstroms ($5.13 \times 10^{-10}$m), which is approximately twice that of the hexagonal cell constant for the $(Co_{80}Cr_{20})_{90}W_{10}$ magnetisable layer.

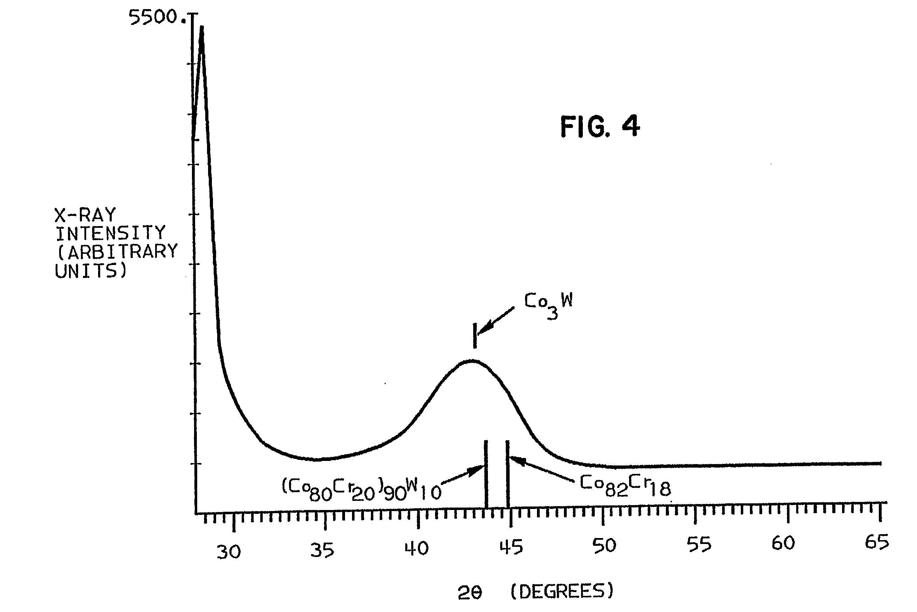

The relationship between the hexagonal cell constants ($a_0$) for the intermediate layer and the magnetisable layer can be understood by reference to Table 1 and to Fig. 4, which is an X-ray diffraction curve for a 100 Angstroms ($1 \times 10^{-8}$m) thick layer of a binary intermetallic compound of $Co_3W$ deposited on a silicon substrate. This film shows a peak X-ray intensity at approximately 43.5°. The hexagonal cell constant for a $Co_3W$ layer can be determined from the X-ray diffraction curve (which yields the peak diffraction angle $2\theta$) and the relationship

$$\lambda = 2D \sin \theta,$$

where $\lambda$ is the wavelength of the X-ray and D is the Bragg plane spacing. The Bragg plane spacing D is directly related to the hexagonal cell constant $a_0$. $Co_{80}Cr_{20}$ is hexagonal with a cell constant $a_0 = 2.52$ Angstroms ($2.52 \times 10^{-10}$m). As shown in Table 1, intermediate nucleation layers of $Co_3W$, $Co_3Mo$, $Co_2Nb$, $Co_3V$, $Cr_2Nb$ and $Cr_2Zr$ exhibit a value of $a_0$ which is approximately twice that for $Co_{80}Cr_{20}$, while intermediate nucleation layers of $Co_3Ti$ and $CrIr$ exhibit a value of $a_0$ which is approximately equal to that for $Co_{80}Cr_{20}$. Also shown on Fig. 4 are lines indicating where the peak X-ray intensities would occur for $Co_{82}Cr_{18}$ and $(CoCr)_{90}W_{10}$. Even though Fig. 4 indicates that $Co_3W$ and $Co_{82}Cr_{18}$ have relatively close peak diffraction angles, $2\theta$, there is almost an identical match between $Co_3W$ and $(Co_{80}Cr_{20})_{90}W_{10}$ (the $a_0$ cell constant of $Co_3W$ being almost exactly twice that for $(Co_{80}Cr_{20})_{90}W_{10}$). Thus, the addition of W to the magnetisable layer changes the hexagonal cell constant to a closer match with the hexagonal cell constant for the intermediate nucleating layer.

Fig. 5 shows the relationship between the perpendicular and horizontal coercivities of three media each with a (CoCr)W magnetisable layer deposited over a $(CoCr)_3W$ intermediate nucleating layer for different percentages of W present in the magnetisable layer. All of the media show an excellent ratio of perpendicular to horizontal coercivities, with the minimum horizontal coercivity occurring at a W concentration of about 10 at.%. The thickness of the $(CoCr)_3W$ intermediate nucleating layers for the media of Fig. 5 was 500 Angstroms ($5 \times 10^{-8}$m). However, other media were made with thicknesses of the intermediate nucleating layer of between 300 and 1000 Angstroms ($3 \times 10^{-8}$m and $1 \times 10^{-7}$m) with no significant effect on the magnetic properties.

The orientation of the $(Co_{80}Cr_{20})_3W/(Co_{80}Cr_{20})_{90}W_{10}$ film layer structure deposited at 95 Watts (Fig. 3) was established by X-ray diffraction to measure the dispersion of the C-axis. An absolute measurement of orientation was obtained by deposition of the film layer structure on a polyimide substrate and examination of the film layer structure in transmission and reflection. The X-ray diffraction spectra obtained in reflection showed that only the (0002) planes are parallel to the film layer surface. The X-ray diffraction spectra obtained in transmission, which is sensitive to planes with a normal component to the film surface, showed that only planes normal to the [00.2] axis are present. These results indicate that the $(Co_{80}Cr_{20})_3W$ intermediate nucleation layer is nearly perfectly lattice matched to the $(Co_{80}Cr_{20})_{90}W_{10}$ magnetisable layer.

In the magnetisable layers of the media made according to the present invention the Cr preferably comprises between approximately 14 and 22 at.% of the CoCr. This is the range of solid solution alloy of interest in vertical recording media, because, below approximately 14 at.%, the magnetisation is still principally in-plane and above approximately 22 at.% the magnetic moment has been appreciably diminished.

The intermediate nucleating layer in a recording medium according to the present invention can be formed by sputter deposition from two separate targets, one of $Co_{80}Cr_{20}$ and one of W, by controlling the power to the respective targets so that the proper 3 to 1 stoichometric ratio can be achieved during the sputter deposition process. It is also possible to purchase commercially available targets of $Co_3W$ or $(CoCr)_3W$ so that a single target can be used to sputter deposit the intermediate nucleating layer.

The above description and drawings relate only to the novel feature of a vertical recording medium according to the invention and not to the well known portions of the medium and the medium fabrication processes. For example, in the fabrication of a thin film metal alloy medium, it is known to provide a protective overcoat, such as a sputtered carbon film, over the magnetisable layer and in certain instances to provide an adhesion layer, such as a sputtered titanium film, between the overcoat and the magnetisable film. In addition, if the medium is to be used with vertical magnetic recording pole heads located on the same side of the medium, then it would be necessary to provide an additional soft magnetisable underlayer, such as nickel-iron (NiFe), between the intermediate nucleating layer and the substrate to provide a magnetic flux return path.

## Claims

1. A magnetic recording medium for vertical recording comprising a substrate (1), an intermediate layer (2) formed on said substrate and a magnetisable layer (3) formed on said intermediate layer,

said intermediate layer (2) comprising a first constituent of an element selected from the group consisting of tungsten (W), molybdenum (Mo), niobium (Nb), titanium (Ti), vanadium (V), iridium (Ir) and zirconium (Zr), and a second constituent consisting of either cobalt (Co), chromium (Cr), or a solid substitutional solution alloy of CoCr, wherein the amounts of the first and second constituents are present in a fixed stoichiometric ratio so as to form an intermetallic compound with a hexagonal crystalline structure, and

said magnetisable layer (3) comprising a ternary alloy of the form $(Co_{100-y}Cr_y)X$, wherein y is approximately in the range of 14 to 22 and wherein X is selected from the group consisting of W, Mo, Nb, Ti and V, and has an hexagonal crystalline structure with its C-axis oriented generally perpendicular to said substrate (1),

the hexagonal cell constants of said intermediate layer (2) and said magnetisable layer (3) being related by approximately integral multiples whereby the hexagonal crystalline orientation of said magnetisable layer (3) is enhanced.

2. A magnetic recording medium as claimed in claim 1 wherein the first constituent of said intermediate layer (2) is either W, Mo, Nb, Ti or V, the second constituent of said intermediate layer (2) is Co or CoCr alloy, and the selected element X in said magnetisable layer (3) is the same as the first constituent in said intermediate layer (2).

3. A magnetic recording medium as claimed in claim 1 wherein the first constituent of said intermediate layer (2) is Ir, Nb or Zr, the second constituent of said intermediate layer (2) is Cr and the stoichometric ratio of the second constituent to the first constituent is 2 to 1.

4. A magnetic recording medium as claimed in claim 1 wherein said intermediate layer (2) comprises a mixture of Co and W, the amounts of Co and W being present in a stoichometric ratio of three to one so as to form the intermetallic compound $Co_3W$ of cobalt and tungsten, the $Co_3W$ having a hexagonal crystalline structure with its C-axis oriented generally perpendicular to said substrate (1), and

said magnetisable layer (3) comprises a ternary alloy CoCrW of Co, Cr, and W having a hexagonal crystalline structure with its C-axis oriented generally perpendicular to said substrate (1),

the amount of W present in the CoCrW alloy being such that the hexagonal cell constant of the CoCrW alloy is approximately half the hexagonal cell constant of the $Co_3W$ intermetallic compound of said intermediate layer (2), whereby the hexagonal crystalline orientation of said magnetisable layer (3) is enhanced.

5. A magnetic recording medium as claimed in claim 1 wherein said intermediate layer (2) has a hexagonal crystalline structure comprising an intermetallic compound of W and the solid substitutional solution of Co and Cr, the amount of W and CoCr being present in a stoichometric ratio of 3 to 1 so as to form the intermetallic compound $(CoCr)_3W$, and

said magnetisable layer (3) comprises a ternary alloy CoCrW of Co, Cr and W having a hexagonal crystalline structure with its C-axis oriented generally perpendicular to said substrate (1),

the amount of W present in the CoCrW alloy being such that the hexagonal cell constant of the CoCrW alloy is approximately half the hexagonal cell constant of the $(CoCr)_3W$ intermetallic compound of said intermediate layer (2), whereby the hexagonal crystalline orientation of said magnetisable layer (3) is enhanced.

6. A magnetic recording medium as claimed in any one of the preceding claims wherein it includes a protective overcoat formed over said magnetisable layer (3).

7. A magnetic recording medium as claimed in any one of the preceding claims wherein it includes a soft magnetisable underlayer between said intermediate layer (2) and said substrate (1) for providing a magnetic flux return path.

## Revendications

1. Milieu d'enregistrement magnétique pour enregistrement vertical comprenant un substrat (1), une couche intermédiaire (2) formée sur ce substrat et une couche magnétisable (3) formée sur cette couche intermédiaire,

cette couche intermédiaire (2) comprenant un premier constituant d'un élément choisi dans le groupe consistant en tungstène (W), molybdène (Mo), niobium (Nb), titane (Ti), vanadium (V), iridium (Ir) et zirconium (Zr), et un second constituant consistant en cobalt (Co), chrome (Cr) ou en un alliage en solution de substitution solide, dans laquelle les quantités des premier et second constituants sont présentes selon un rapport stoechiométrique fixé de façon à former un composé intermétallique avec une structure cristalline hexagonale, et

cette couche magnétisable (3) comprenant un alliage ternaire de la forme $(Co_{100-y}Cr_y)X$, dans laquelle y est environ dans la gamme de 14 à 22 et X est choisi dans le groupe consistant en W, Mo, Nb, Ti et V, et a une structure cristalline hexagonale ayant son axe C orienté en général perpendiculairement à ce substrat (1),

les constantes de la cellule hexagonale de cette couche intermédiaire (2) et de cette couche magnétisable (3) étant reliées par des multiples à peu près entiers, si bien que l'orientation cristalline hexagonale de cette couche magnétisable (3) est améliorée.

2. Milieu d'enregistrement magnétique suivant la revendication 1, dans lequel le premier constituant de cette couche intermédiaire (2) est W, Mo, Nb, Ti ou V, le second constituant de cette couche intermédiaire (2) est Co ou un alliage de CoCr, et l'élément choisi X dans la couche magnétisable (3) est le même que le premier constituant dans cette couche intermédiaire (2).

3. Milieu d'enregistrement magnétique suivant la revendication 1, dans lequel le premier constituant de cette couche intermédiaire (2) est Ir, Nb ou Zr, le second constituant de cette couche intermédiaire (2) est Cr et le rapport stoechiométrique du second constituant au premier constiutant est de 2 à 1.

4. Milieu d'enregistrement magnétique suivant la revendication 1, dans lequel cette couche intermédiaire (2) comprend un mélange de Co et de W, les quantités de Co et de W étant présentes selon un rapport stoechiométrique de trois à un pour former le composé intermétallique $Co_3W$ de cobalt et de tungstène, le $Co_3W$ ayant une structure hexagonale cristalline avec son axe C orienté en général perpendiculairement à ce substrat (1),

cette couche magnétisable (3) comprend un aliliage ternaire CoCrW de Co, Cr et de W ayant une structure cristalline hexagonale avec son axe C orienté en général perpendiculairement à ce substrat (1),

la quantité de W présente dans l'alliage CoCrW étant telle que la constante de la cellule hexagonale de l'alliage CoCrW est à peu près la moitié de la constante de la cellule hexagonale du composé intermétallique $Co_3W$ de cette couche intermédiaire (2), si bien que l'orientation cristalline hexagonale de cette couche magnétisable (3) est améliorée.

5. Milieu d'enregistrement magnétique suivant la revendication 1, dans lequel cette couche intermédiaire (2) a une structure cristalline hexagonale comprenant un composé intermétallique de W et la solution de substitution solide de Co et de Cr, les quantités de W et de CoCr étant présentes selon un rapport stoechiométrique de 3 à 1 de façon à former le composé intermétallique $(CoCr)_3W$, et

cette couche magnétisable (3) comprend un alliage ternaire CoCrW de Co, Cr et W ayant une structure cristalline hexagonale avec son axe C orienté en général perpendiculairement à ce substrat (1),

la quantité de W présente dans l'alliage CoCrW étant telle que la constante de la cellule hexagonale de l'alliage de CoCrW est à peu près la moitié de la constante de la cellule hexagonale du composé intermétallique $(CoCr)_3W$ de cette couche intermédiaire (2), si bien que l'orientation cristalline hexagonale de cette couche magnétisable (3) est améliorée.

6. Milieu d'enregistrement magnétique suivant l'une des revendications précédentes, dans lequel il y a de plus une surcouche de protection formée sur cette couche magnétisable (3).

7. Milieu d'enregistrement magnétique suivant l'une des revendications précédentes, dans lequel il y a une couche sous-jacente magnétisable tendre entre cette couche intermédiaire (2) et ce substrat (1) pour fournir un chemin de retour au flux magnétique.

**Patentansprüche**

1. Magnetisches Aufzeichnungsmedium für vertikale Aufzeichnungen, ein Substrat (1), eine Zwischenschicht (2) auf besagtem Substrat und eine magnetisierbare Schicht (3) auf besagter Zwischenschicht enthaltend,

wobei besagte Zwischenschicht (2) einen ersten Bestandteil eines Elementes enthält, das aus der Gruppe Wolfram (W), Molybdän (Mo), Niobium (Nb), Titanium (Ti), Vanadium (V), Iridium (Ir) und Zirconium (Zr) ausgewählt wird, und einen zweiten Bestandteil, entweder Kobalt (Co), Chrom (Cr) oder eine starre Ersatzlösungslegierung aus CoCr, in der die ersten und zweiten Bestandteile in einem festen stöchiometrischen Verhältnis vorhanden sind, um eine intermetallische Verbindung mit hexagonaler Kristallstruktur zu bilden, und

besagte magnetisierbare Schicht (3) eine ternäre Legierung von der Form $Co_{100-y}Cr_y)X$ aufweist, in der y annähernd im Bereich von 14 bis 22 liegt und X aus der Gruppe W, Mo, Nb, Ti und V gewählt wird und eine hexagonale Kristallstruktur aufweist, meist mit ihrer C-Achse senkrecht zum besagten Substrat (1),

und die hexagonalen Zellenkonstanten der besagten Zwischenschicht und der besagten magnetisierbaren Schicht (3) durch annähernd ganzzahlige Vielfache verbunden sind, wodurch die hexagonale kristalline Ausrichtung der besagten magnetisierbaren Schicht (3) gefördert wird.

2. Magnetisches Aufzeichnungsmedium gemäß Anspruch 1, in dem der erste Bestandteil der besagten Zwischenschicht (2) entweder W, Mo, Nb, Ti oder V ist, und der zweite Bestandteil der besagten Zwischenschicht (2) Co oder eine Legierung CoCr ist, und das ausgewählte Element X in der besagten magnetisierbaren Schicht (3) das gleiche wie der erste Bestandteil in der besagten Zwischenschicht (2) ist.

3. Magnetisches Aufzeichnungsmedium gemäß Anspruch 1, in dem der erste Bestandteil der besagten Zwischenschicht (2) Ir, Nb oder Zr ist, der zweite Bestandteil der besagten Zwischenschicht (2) Cr ist und das stöchiometrische Verhältnis des zweiten Bestandteils zum ersten 2 zu 1 beträgt.

4. Magnetisches Aufzeichnungsmedium gemäß Anspruch 1, in dem besagte Zwischenschicht (2) ein Gemisch von Co und W enthält, und die Anteile von Co und W in einem stöchiometrischen Verhältnis von drei zu eins vorhanden sind, um die zwischenmetallische Verbindung $Co_3W$ von Kobalt und Wolfram zu bilden, und das $Co_3W$ eine hexagonale Kristallstruktur aufweist, deren C-Achse gewöhnlich senkrecht zum besagten Substrat (1) ausgerichtet ist und

besagte magnetisierbare Schicht (3) eine ternäre Legierung CoCrW aus Co, Cr und W enthält, mit einer hexagonalen Kristallstruktur, deren C-Achse gewöhnlich senkrecht zum besagten Substrat (1) ausgerichtet ist,

wobei der Anteil von W in der CoCrW-Legierung so ist, daß die hexagonale Zellkonstante der CoCrW-Legierung annähernd die Hälfte der hexagonalen Zellkonstante der intermetallischen $Co_3W$-Verbindung der besagten Zwischenschicht (2) beträgt, wodurch die hexagonale kristalline Ausrichtung der besagten magnetisierbaren Schicht gefördert wird.

5. Magnetisches Aufzeichnungsmedium gemäß Anspruch 1, in dem besagte Zwischenschicht (2) eine hexagonale kristalline Struktur aufweist, mit einer intermetallischen Verbindung von W und der festen Ersatzlösung von Co und Cr, und die Anteile von W und CoCr in einem stöchiometrischen Verhältnis von 3 zu 1 vorhanden sind, um die intermetallische Verbindung $(CoCr)_3W$ zu bilden, und

besagte magnetisierbare Schicht (3) eine ternäre Legierung CoCrW aus Co, Cr und W enthält, mit einer hexagonalen Kristallstruktur, deren C-Achse gewöhnlich senkrecht zum besagten Substrat (1) ausgerichtet ist,

wobei der Anteil von W in der CoCrW-Legierung so ist, daß die hexagonale Zellkonstante der CoCrW-Legierung annähernd die Hälfte der hexagonalen Zellkonstante der intermetallischen $Co_3W$-Verbindung der besagten Zwischenschicht (2) beträgt, wodurch die hexagonale kristalline Ausrichtung der besagten magnetisierbaren Schicht gefördert wird.

6. Magnetisches Aufzeichnungsmedium gemäß einem der vorangehenden Ansprüche, das eine schützende Deckschicht über der besagten magnetisierbaren Schicht enthält.

7. Magnetisches Aufzeichnungsmedium gemäß einem der vorangehenden Ansprüche, das eine weiche magnetisierbare Unterschicht zwischen besagter Zwischenschicht (2) und besagtem Substrat (1) enthält, um einen Rückweg für den magnetischen Fluß bereitzustellen.

FIG. 1

$Hc_\perp = 1000\ Oe$

$Hc_\parallel = 75\ Oe$

FIG. 2

EP 0 220 597 B1

FIG. 3

Si/(CoCr)$_3$W/(CoCr)$_{90}$W$_{10}$

o   Hc$\perp$
x   HcII

Hc(Oe)

HEATER POWER (watts)

FIG. 5

(Co$_{80}$Cr$_{20}$)$_3$W/(CoCr)W

o  H $\perp$
x  H II

Hc(Oe)

%W IN(CoCr)W

FIG. 4

X-RAY INTENSITY (ARBITRARY UNITS)

5500.

$Co_3W$

$(Co_{80}Cr_{20})_{90}W_{10}$

$Co_{82}Cr_{18}$

$2\theta$ (DEGREES)

30 35 40 45 50 55 60 65